# EUROPÄISCHE PATENTSCHRIFT

(11) **EP 1 813 467 B1**
(45) Veröffentlichungstag und Bekanntmachung des Hinweises auf die Patenterteilung: **22.07.2009**
(21) Anmeldenummer: 07000308.2
(22) Anmeldetag: 09.01.2007
(51) Int. Cl.: B60N 2/225, F16H 1/32, B60N 2/44

(54) **Gelenkbeschlag**
Hinge fitting
Ferrure d'articulation

(30) Priorität: 17.01.2006 DE 102006002140
(43) Veröffentlichungstag der Anmeldung: 01.08.2007
(73) Patentinhaber: Voss, Hans Werner, 67806 Rockenhausen (DE)
(72) Erfinder: Voss, Hans Werner, 67806 Rockenhausen (DE)

(56) Entgegenhaltungen:
- DE-A1- 2 509 074
- DE-A1- 3 811 074
- DE-A1- 4 437 073
- FR-A- 2 424 584
- GB-A- 1 462 850

## Beschreibung

Die Erfindung bezieht sich auf einen Gelenkbeschlag für einen Fahrzeugsitz, mit einem feststehenden Beschlagteil und einem schwenkbaren Beschlagteil, die um eine Schwenkachse schwenkbar miteinander verbunden sind, wobei die Schwenkbewegung des schwenkbaren Beschlagteils stufenlos durch eine Blockiervorrichtung blockierbar ist, mit einem ersten Blockierelement, das drehfest mit dem feststehenden Beschlagteil verbunden ist und einem zweiten Blockierelement, das drehfest mit dem schwenkbaren Beschlagteil verbunden ist, wobei die koaxial zur Schwenkachse einander gegenüberliegenden Blockierelemente mittels einer Betätigungseinrichtung miteinander drehfest kuppelbar und entkuppelbar sind.

Bei einem derartigen Gelenkbeschlag ist es bekannt an dem schwenkbaren Beschlagteil koaxial zur Schwenkachse einen Außenkonus fest anzuordnen, auf den von einer Federkraft ein Innenkonus axial beaufschlagbar ist, der axial verschiebbar aber drehfest mit dem feststehenden Beschlagteil verbunden ist.

Durch die Reibverbindung zwischen Außenkonus und Innenkonus sind die beiden Gelenkbeschläge in ihrer Lage zueinander festgelegt.

Durch die Betätigungseinrichtung ist der Innenkonus entgegen der Federkraft vom Außenkonus abhebbar und das schwenkbare Beschlagteil in eine andere Schwenkposition zum feststehenden Beschlagteil schwenkbar, in der dann der Innenkonus wieder auf den Außenkonus aufsetzt und das verschwenkbare Beschlagteil in der neuen Position blockiert.

Damit ist zwar eine stufenlose Verstellung möglich. Bei sehr hohen auf das verschwenkbare Beschlagteil einwirkenden Kräften, wie sie bei starken Verzögerungen des Fahrzeugs auftreten können, kommt es aber zu einer Überwindung der Reibverbindung zwischen Außenkonus und Innenkonus und damit zu einer ungewollten Verstellung des schwenkbaren Bauteils.

Aus der DE 38 11 074 A ist ein Gelenkbeschlag bekannt, der eine drehbar gelagerte Mitnehmervorrichtung aufweist, die mit einem zur Drehachse der Mitnehmervorrichtung permanent geneigten, drehbaren ersten Zahnrad in dieses eingreifend verbunden ist. In einem Abstand zum ersten Zahnrad ist ein radial zur Drehachse ausgerichtetes zweites Zahnrad angeordnet. Die Verzahnungen der beiden Zahnräder besitzen einander zugewandte Axialverzahnungen mit einer Zähnezahldifferenz, wobei das erste Zahnrad mit seinem dem zweiten Zahnrad jeweils axial näheren Bereich in das feststehende zweite Zahnrad eingreift. Das erste Zahnrad ist taumelnd antreibbar, so daß sich durch die Zähnezahldifferenz die beiden Zahnräder gegeneinander verdrehen, wobei diese Bewegung auf die Mitnehmervorrichtung übertragen wird.

Aus der FR 2 424 584 A ist ein Gelenkbeschlag bekannt, der prinzipiell dem eingangs beschriebenen Gelenkbeschlag entspricht. Dabei ist ein feststehendes Beschlagteil über einen handbetätigbaren Riegel mit einem drehbaren Beschlagteil kuppelbar und entkuppelbar. Unabhängig davon ist bei gekuppelten Beschlagteilen eine Verstellbarkeit Ober ein immer in Eingriff stehendes Taumelgetriebe möglich.

Aufgabe der Erfindung ist es daher einen Gelenkbeschlag der eingangs genannten Art zu schaffen, der bei einfachem und wenig Bauraum benötigendem Aufbau auch bei hoher Belastung seine stufenlos eingestellte Position beibehält.

Diese Aufgabe wird erfindungsgemäß dadurch gelöst, daß das feste Beschlagteil ein zur Schwenkachse koaxiales erstes Zahnrad mit einer axial ausgerichteten ersten Verzahnung und das schwenkbare Beschlagteil ein zur Schwenkachse koaxiales zweites Zahnrad mit einer axial ausgerichteten zweiten Verzahnung aufweist, die koaxial zur Schwenkachse zueinander in einem festen Abstand angeordnet sind, wobei in diesem Abstand koaxial zwischen der ersten und der zweiten Verzahnung ein Sperrrad angeordnet ist, das beidseitig jeweils eine radial umlaufende, radial ausgerichtete Verzahnung mit zueinander versetzter Teilung aufweist, deren Geometrien so ausgebildet sind, daß sie in die ihnen jeweils koaxial gegenüberliegenden Verzahnungen von festem Beschlagteil und beweglichem Beschlagteil eintauchbar sind, wobei die erste Verzahnung des festen Beschlagteils gleiche Zähnezahl wie die ihr koaxial gegenüberliegende Verzahnung des Sperrrades und die zweite Verzahnung des beweglichen Beschlagteils eine Zahndifferenz zu der ihr koaxial gegenüberliegenden Verzahnung des Sperrrades besitzt, und wobei das zur Schwenkachse neigbare Sperrrad durch die Betätigungseinrichtung zwischen den beiden Zahnrädern axial bewegbar ist.
Ein derartiger Gelenkbeschlag kann für Sitze mit verstellbarer Lehne z.B. in Kraftfahrzeugen aber auch in Flugzeugen verwandt werden.

Es können an derartigen Sitzen auch Einstellung von Höhen-, Neigungs- und Lordoseneinstellungen erfolgen.

Vorzugsweise ist der Zahnwinkel der Zähne der Verzahnungen etwas größer als der Winkel des Reibwertes der verwendeten Materialpaarung der Zahnräder. Da dieser Winkel bei etwa 6 bis 7° liegt, ist es von Vorteil, wenn der Zahnwinkel der Zähne bei etwa 9° liegt. Dies führt dazu, daß die bei Belastung auf die Zahnräder einwirkenden axialen Kräfte in einem moderaten Größenbereich liegen.

Zum Verstellen des Gelenkbeschlags wird das Sperrrad durch die Betätigungseinrichtung axial zum ersten Zahnrad hin bewegt und taucht dort mit seiner Verzahnung vollständig in die Verzahnung des ersten Zahnrades ein.

Damit ist das Sperrrad völlig außer Eingriff von dem zweiten Zahnrad, so daß das schwenkbare Beschlagteil frei verschwenkt werden kann.

Wird dann das Sperrrad durch die Betätigungseinrichtung axial zum zweiten Zahnrad hin bewegt, kommt es aufgrund der Zahndifferenz zwischen der Verzahnung des zweiten Zahnrads und der ihr gegenüberliegenden Verzahnung des Sperrrades in einem Teilbereich zu einem Aufeinanderliegen der Zahnköpfe dieser beiden Verzahnungen, während in dem diesem Teilbereich diametral gegenüberliegenden Bereich die Verzahnungen von erstem Zahnrad und Sperrrad ineinander tauchen. Dadurch kommt es zu einem Kippen des Sperrrades relativ zur Schwenkachse und einem Eintauchen der Verzahnung des Sperrrades mit einem dem in das zweite Zahnrad eingetauchten Bereich diametral gegenüberliegenden Bereich des Sperrrades in die Verzahnung des ersten Zahnrades.

Damit sind das erste und das zweite Zahnrad über das Sperrrad formschlüssig miteinander verbunden und das zweite Zahnrad und mit ihm das bewegliche Beschlagteil arretiert.

Vorzugsweise besitzen die beidseitigen Verzahnungen des Sperrrades gleiche Zähnezahl und sind um eine halbe Teilung zueinander versetzt.

Zu einem guten Eingreifen der Verzahnungen des Sperrrades in die Verzahnungen des ersten und des zweiten Zahnrades führt es, wenn die zweite Verzahnung des beweglichen Beschlagteils eine Zahndifferenz von "1" oder von ">1" zu der ihr koaxial gegenüberliegenden Verzahnung des Sperrrades besitzt.

Das Sperrrad kann mit einer Koaxialbohrung frei drehbar und kippbar auf einer zur Schwenkachse koaxialen Nabe gelagert sein, die zu ihrer Lagerung durch zur Schwenkachse koaxiale Lagerbohrungen des ersten Zahnrads und/oder des zweiten Zahnrads hindurchgeführt sein kann. Zum axialen Bewegen des Sperrrades in seine beiden Positionen kann in einfacher Weise die Nabe zwischen einer Einkuppelstellung und einer Entkuppelstellung von der Betätigungseinrichtung axial verschiebbar in den Lagerbohrungen gelagert und das Sperrrad beidseitig zwischen an der Nabe angeordneten, das Sperrrad axial kraftbeaufschlagenden Federelementen gehalten sein.

Dazu sind vorzugsweise die Federelemente Scheibenfedern, die mit ihren Bohrungen in radial umlaufend an der Nabe ausgebildeten Ringnuten angeordnet sind und mit ihrem äußeren radial umlaufenden Bereich mit Vorspannung an den Seitenflächen des Sperrrades in Anlage sind.

Um das Sperrrad in der jeweils eingenommenen Einkuppelstellung oder Entkuppelstellung zu sichern, kann die Nabe in der Einkuppelstellung und/oder in der Entkuppelstellung z.B. durch eine Rasteinrichtung arretierbar sein.

Ein besonders guter und hochbelastbarer Eingriff der Verzahnungen ineinander wird dadurch erreicht, daß die Verzahnungen des ersten Zahnrads und/oder des zweiten Zahnrads entsprechend der Neigungsauslenkung des Sperrrads zur Schwenkachse geneigt ausgebildet sind.

Eine schützende Kammerung des Bereichs des Sperrrades und der Verzahnungen der beiden Zahnräder erfolgt auf einfache Weise ohne zusätzliche Bauteile dadurch, daß das erste Zahnrad und das zweite Zahnrad mit ihren radial außerhalb des Sperrrads befindlichen, einander zugewandten axial gerichteten Ringbereichen aneinander in Anlage sind.

Zur Führung der beiden relativ zueinander verdrehbaren Zahnräder kann der axial gerichtete Ringbereich des einen Zahnrads eine konzentrisch umlaufende, zum anderen Zahnrad hin offene Nut aufweisen, in die ein oder mehrere axial hervorstehende Ansätze entsprechender radialer Breite des anderen Zahnrads eingreifen.

Vorzugsweise ist das erste Zahnrad durch ein Sicherungselement gegen axiales Abheben von dem zweiten Zahnrad gesichert.

Ein Ausführungsbeispiel der Erfindung ist in der Zeichnung dargestellt und wird im folgenden näher beschrieben. Es zeigen
- Figur 1: einen Querschnitt eines Gelenkbeschlags in der Entkuppelstellung
- Figur 2: den Gelenkbeschlag nach Figur 1 in der Einkuppelstellung

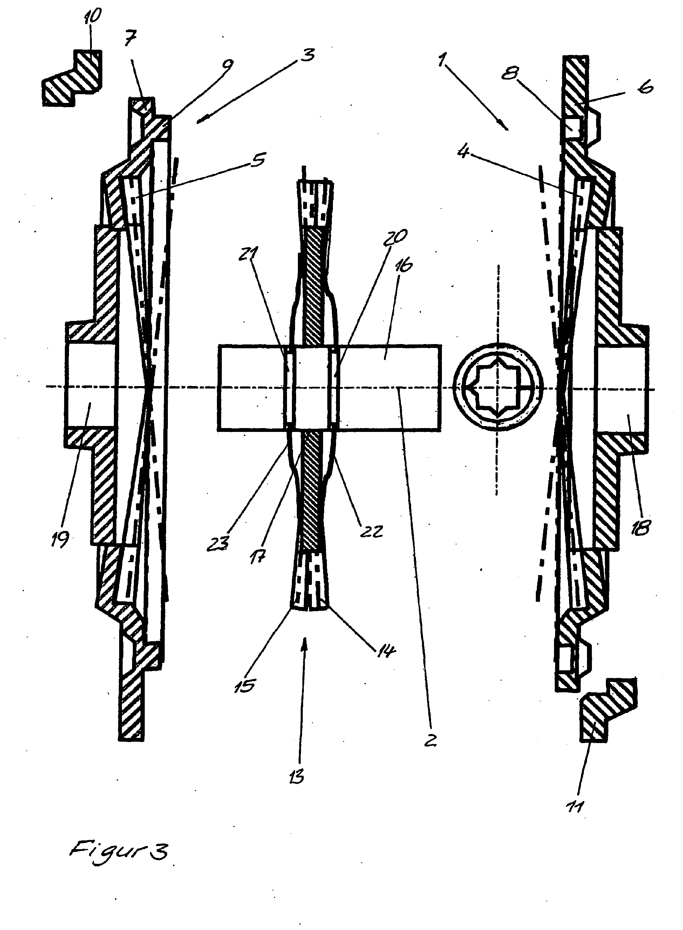

- Figur 3: den Gelenkbeschlag nach Figur 1 in einer Explosionsdarstellung.

Der in den Figuren dargestellte Gelenkbeschlag weist ein mit einem feststehenden Beschlagteil einteilig ausgebildetes erstes Zahnrad 1 und ein mit einem um eine Schwenkachse 2 relativ zum feststehenden Beschlagteil schwenkbares, einteilig mit einem zweiten Zahnrad 3 ausgebildetes schwenkbares Beschlagteil auf.

Das erste Zahnrad 1 weist eine axial ausgerichtete Verzahnung 4 und das zweite Zahnrad 3 eine ebenfalls axial ausgerichtete Verzahnung 5 auf, wobei die beiden Verzahnungen 4 und 5 axial einander gegenüberliegen und einander zugewandt sind sowie vorzugsweise als Kegelradverzahnung ausgebildet sind.

Mit ihren radial außerhalb der Verzahnungen 4 und 5 befindlichen, einander zugewandten Ringbereichen 6 und 7 liegen die Zahnräder 1 und 3 aneinander. Dabei ist in dem Ringbereich 6 des ersten Zahnrads 1 eine zum Ringbereich 7 des zweiten Zahnrads 3 hin offene, zur Schwenkachse 2 konzentrische Ringnut 8 ausgebildet, in die ein axial hervorstehender Ringansatz 9 des zweiten Zahnrads 3 entsprechenden Querschnitts eingreift.

An dem ersten Zahnrad 1 ist ein Sicherungselement 10 befestigt, das den radial umlaufenden Rand des zweiten Zahnrads 3 umgreift. Diametral dem Sicherungselement 10 gegenüberliegend ist an dem zweiten Zahnrad 3 ein entsprechendes Sicherungselement 11 befestigt, das den radial umlaufenden Rand des ersten Zahnrades 1 umgreift. Durch die Sicherungselemente 10 und 11 werden die Zahnräder 1 und 3 gegen axiales Abheben voneinander gesichert.

Von dem radial äußeren Bereich der Verzahnungen 4 und 5 aus besteht radial nach innen hin ein axialer Abstand zwischen den beiden Zahnrädern 1 und 3, wodurch eine kreisscheibenartige Kammer 12 gebildet ist.

In dieser Kammer 12 ist koaxial zur Schwenkachse 2 ein Sperrrad 13 angeordnet, das beidseitig jeweils eine axiale Verzahnung 14 und 15 aufweist. Die Verzahnungen 14 und 15 besitzen gleiche Zähnezahl und sind um eine halbe Teilung zueinander versetzt ausgebildet. Sie sind um ein geringes Maß zu ihren radial äußeren Enden hin gegenüber der Achse 8 geneigt.

Dabei liegt die Verzahnung 14 des Sperrrades 13 der Verzahnung 4 des ersten Zahnrades 1 und die Verzahnung 15 des Sperrrades 13 der Verzahnung 5 des zweiten Zahnrades 3 koaxial gegenüber. Die Verzahnungen 14 und 15 des Sperrrades 13 sind in ihrer Geometrie so gestaltet, daß ein Eintauchen in die jeweils gegenüberliegende Verzahnung 4 bzw. 5 von einem ersten und zweiten Zahnrad 1 und 3 ermöglicht wird.

Die Verzahnung 5 des zweiten Zahnrads 3 weist gegenüber der ihr axial gegenüberliegenden Verzahnung 15 des Sperrrades 13 eine Zahndifferenz von "1" auf, während die Verzahnung 4 des ersten Zahnrades 1 eine Zahndifferenz gegenüber der ihr gegenüberliegenden Verzahnung 14 des Sperrrades 13 von "0" aufweist.

Zur Schwenkachse 8 koaxial durchragt eine Nabe 16 eine Koaxialbohrung 17 des Sperrrades 13 derart, daß das Sperrrad 13 auf der Nabe 16 frei drehbar und kippbar angeordnet ist.

Die Nabe 16 ist weiterhin durch zur Schwenkachse 2 koaxiale Lagerbohrungen 18 und 19 des ersten Zahnrades 1 und des zweiten Zahnrades 3 hindurchgeführt und in diesen Lagerbohrungen 18 und 19 durch eine nicht dargestellte Betätigungsvorrichtung zwischen einer Einkuppelstellung und einer Entkuppelstellung axial verschiebbar.

In einem Abstand sind beidseitig des Sperrrades 13 radial umlaufende Ringnuten 20 in der radial umlaufenden Mantelfläche der Nabe 16 ausgebildet, in die jeweils eine Scheibenfeder 22 und 23 mit ihrer Durchgangsbohrung eingesetzt ist.

Die beiden Scheibenfedern 22 und 23 liegen mit ihrem äußeren radial umlaufenden Bereich mit Vorspannung an den Seitenflächen des Sperrrades 13 an.

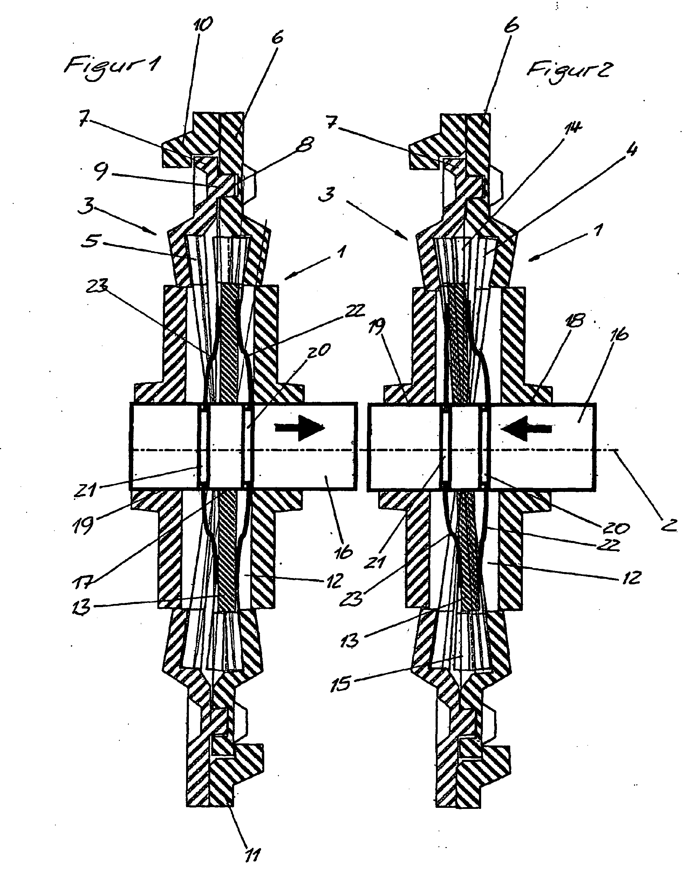

In der normalerweise eingenommenen Einkuppelstellung (Figur 2) ist die Nabe 16 durch die Betätigungseinrichtung in Richtung zum zweiten Zahnrad 3 verschoben und drückt über die Scheibenfeder 22 das Sperrrad 13 mit einem Teil seiner Verzahnung 15 in die Verzahnung 5 des zweiten Zahnrades 3.

Da dabei das Sperrrad 13 gegenüber der Schwenkachse 2 kippt, gelangt die dem in Eingriff gelangenden Teil der Verzahnung 15 diametral gegenüberliegenden Verzahnung 14 des Sperrrades 13 in Eingriff in die Verzahnung 4 des ersten Zahnrades 1.

Dadurch ist das zweite Zahnrad 3 in seiner eingenommenen Schwenkposition blockiert.
Wird die Nabe 16 durch die Betätigungseinrichtung in Richtung zum ersten Zahnrad 1 verschoben, wird das Sperrrad 13 durch die Scheibenfeder 23 mit seiner Verzahnung 14 vollständig in die Verzahnung 4 des ersten Zahnrades eingetaucht, so daß das zweite Zahnrad 3 frei verschwenkt werden kann (Figur 1).

### Bezugszeichenliste

- 1: erstes Zahnrad
- 2: Schwenkachse
- 3: zweites Zahnrad
- 4: Verzahnung
- 5: Verzahnung
- 6: Ringbereich
- 7: Ringbereich
- 8: Ringnut
- 9: Ringansatz
- 10: Sicherungselement
- 11: Sicherungselement
- 12: Kammer
- 13: Sperrrad
- 14: Verzahnung
- 15: Verzahnung
- 16: Nabe
- 17: Koaxialbohrung
- 18: Lagerbohrung
- 19: Lagerbohrung
- 20: Ringnut
- 21: Ringnut
- 22: Scheibenfeder
- 23: Scheibenfeder

## Patentansprüche

1. Gelenkbeschlag für einen Fahrzeugsitz, mit einem feststehenden Beschlagteil und einem schwenkbaren Beschlagteil, die um eine Schwenkachse schwenkbar miteinander verbunden sind, wobei die Schwenkbewegung des schwenkbaren Beschlagteils stufenlos durch eine Blockiervorrichtung blockierbar ist, mit einem ersten Blockierelement, das drehfest mit dem feststehenden Beschlagteil verbunden ist und einem zweiten Blockierelement, das drehfest mit dem schwenkbaren Beschlagteil verbunden ist, wobei die koaxial zur Schwenkachse einander gegenüberliegenden Blockierelemente mittels einer Betätigungseinrichtung miteinander drehfest kuppelbar und entkuppelbar sind, **dadurch gekennzeichnet, daß** das feste Beschlagteil ein zur Schwenkachse (2) koaxiales erstes Zahnrad (1) mit einer axial ausgerichteten ersten Verzahnung (4) und das schwenkbare Bauteil ein zur Schwenkachse (2) koaxiales zweites Zahnrad (3) mit einer axial ausgerichteten zweiten Verzahnung (5) aufweist, die koaxial zur Schwenkachse (2) zueinander in einem festen Abstand angeordnet sind, wobei in diesem Abstand koaxial zwischen der ersten und der zweiten Verzahnung (4, 5) ein Sperrrad (13) angeordnet ist, das beidseitig jeweils eine radial umlaufende, axial ausgerichtete Verzahnung (14, 15) mit zueinander versetzter Teilung aufweist, deren Geometrien so ausgebildet sind, daß sie in die ihnen jeweils koaxial gegenüberliegenden Verzahnungen (4, 5) von festem Beschlagteil und beweglichem Beschlagteil eintauchbar sind, wobei die erste Verzahnung (4) des festen Beschlagteils gleiche Zähnezahl wie die ihr koaxial gegenüberliegende Verzahnung (14) des Sperrrades (13) und die zweite Verzahnung (5) des beweglichen Beschlagteils eine Zahndifferenz zu der ihr koaxial gegenüberliegenden Verzahnung (15) des Sperrrades (13) besitzt, und wobei das zur Schwenkachse (2) neigbare Sperrrad (13) durch die Betätigungseinrichtung zwischen den beiden Zahnrädern (1,3) axial bewegbar ist.

2. Gelenkbeschlag nach Anspruch 1, **dadurch gekennzeichnet, daß** die beidseitigen Verzahnungen (14, 15) des Sperrrades (13) gleiche Zähnezahl besitzen und um eine halbe Teilung zueinander versetzt sind.

3. Gelenkbeschlag nach einem der vorhergehenden Ansprüche, **dadurch gekennzeichnet, daß** die zweite Verzahnung (5) des beweglichen Beschlagteils eine Zahndifferenz von "1" oder von "1" zu der ihr koaxial gegenüberliegenden Verzahnung (15) des Sperrrades (13) besitzt.

4. Gelenkbeschlag nach einem der vorhergehenden Ansprüche, **dadurch gekennzeichnet, daß** das Sperrrad (13) mit einer Koaxialbohrung (17) frei drehbar und kippbar auf einer zur Schwenkachse (2) koaxialen Nabe (16) gelagert ist.

5. Gelenkbeschlag nach Anspruch 4, **dadurch gekennzeichnet, daß** die Nabe (16) durch zur Schwenkachse (2) koaxiale Lagerbohrungen (18, 19) des ersten Zahnrads (1) und/oder des zweiten Zahnrads (3) hindurchgeführt ist.

6. Gelenkbeschlag nach Anspruch 5; **dadurch gekennzeichnet, daß** die Nabe (16) zwischen einer Einkuppelstellung und einer Entkuppelstellung von der Betätigungseinrichtung axial verschiebbar in den Lagerbohrungen (18, 19) gelagert und das Sperrrad (13) beidseitig zwischen an der Nabe (16) angeordneten, das Sperrrad (13) axial kraftbeaufschlagenden Federelementen gehalten ist.

7. Gelenkbeschlag nach Anspruch 6, **dadurch gekennzeichnet, daß** die Federelemente Scheibenfedem (22, 23) sind, die mit ihren Bohrungen in radial umlaufend an der Nabe (16) ausgebildeten Ringnuten (20, 21) angeordnet sind und mit ihrem äußeren radial umlaufenden Bereich mit Vorspannung an den Seitenflächen des Sperrrades (13) in Anlage sind.

8. Gelenkbeschlag nach einem der Ansprüche 5 bis 7, **dadurch gekennzeichnet, daß** die Nabe in der Einkuppelstellung und/oder in der Entkuppelstellung arretierbar ist.

9. Gelenkbeschlag nach einem der vorhergehenden Ansprüche, **dadurch gekennzeichnet, daß** die Verzahnungen (4, 5) des ersten Zahnrads (1) und/oder des zweiten Zahnrads (3) entsprechend der Neigungsauslenkung des Sperrrads (13) zur Schwenkachse (2) geneigt ausgebildet sind.

10. Gelenkbeschlag nach einem der vorhergehenden Ansprüche, **dadurch gekennzeichnet, daß** das erste Zahnrad (1) und das zweite Zahnrad (3) mit ihren radial außerhalb des Sperrrads (13) befindlichen, einander zugewandten axial gerichteten Ringbereichen (6, 7) aneinander in Anlage sind.

11. Gelenkbeschlag nach Anspruch 10, **dadurch gekennzeichnet, daß** der axial gerichtete Ringbereich (6) des einen Zahnrads (1) eine konzentrisch umlaufende, zum anderen Zahnrad (3) hin offene Ringnut (8) aufweist, in die ein oder mehrere axial hervorstehende Ansätze (9) entsprechender radialer Breite des anderen Zahnrads (3) eingreifen.

12. Gelenkbeschlag nach einem der Ansprüche 10 und 11, **dadurch gekennzeichnet, daß** das erste Zahnrad (1) durch Sicherungselemente (10, 11) gegen axiales Abheben von dem zweiten Zahnrad (3) gesichert ist.

## Claims

1. Hinge fitting for a vehicle seat, with a fixed fitting part and a pivotable fitting part which are connected to each other in a manner such that they can pivot about a pivot axis, wherein the pivoting movement of the pivotable fitting part can be infinitely variably blocked by a blocking device, with a first blocking element which is connected in a rotationally fixed manner to the fixed fitting part, and a second blocking element which is connected in a rotationally fixed manner to the pivotable fitting part, wherein the blocking elements which lie opposite each other coaxially with respect to the pivot axis can be coupled to each other in a rotationally fixed manner and can be decoupled from each other by means of an actuating device, **characterized in that** the fixed fitting part has a first gear wheel (1) which is coaxial with respect to the pivot axis (2) and has an axially oriented, first toothing (4), and the pivotable component has a second gear wheel (3) which is coaxial with respect to the pivot axis (2) and has an axially oriented second toothing (5), said toothings being arranged at a fixed distance from each other coaxially with respect to the pivot axis (2), a locking wheel (13) being arranged at said distance coaxially between the first and second toothings (4, 5), said locking wheel having, on both sides, a respective radially encircling, axially oriented toothing (14, 15) with a mutually offset pitch, the geometries of which are designed in such a manner that said toothings can enter the respectively coaxially opposite toothings (4, 5) of the fixed fitting part and movable fitting part, the first toothing (4) of the fixed fitting part having the same number of teeth as the coaxially opposite toothing (14) of the locking wheel (13), and the second toothing (5) of the movable fitting part having a different number of teeth from the coaxially opposite toothing (15) of the locking wheel (13), and the locking wheel (13) which can be inclined with respect to the pivot axis (2) being movable axially between the two gear wheels (1, 3) by the actuating device.

2. Hinge fitting according to Claim 1, **characterized in that** the toothings (14, 15) on both sides of the locking wheel (13) have the same number of teeth and are offset with respect to each other by half a pitch.

3. Hinge fitting according to one of the preceding claims, **characterized in that** the second toothing (5) of the movable fitting part has a tooth difference of "1" or of ">1" to the coaxially opposite toothing (15) of the locking wheel (13).

4. Hinge fitting according to one of the preceding claims, **characterized in that** the locking wheel (13) is mounted by means of a coaxial bore (17) in a freely rotatable and tiltable manner on a hub (16) which is coaxial with respect to the pivot axis (2).

5. Hinge fitting according to Claim 4, **characterized in that** the hub (16) is guided through bearing bores (18, 19) of the first gear wheel (1) and/or of the second gear wheel (3), which bearing bores are coaxial with respect to the pivot axis (2).

6. Hinge fitting according to Claim 5, **characterized in that** the hub (16) is mounted in a manner such that it can be displaced axially in the bearing bores (18, 19) between a coupling position and a decoupling position by means of the actuating device, and the locking wheel (13) is held on both sides between spring elements which are arranged on the hub (16) and subject the locking wheel (13) axially to the action of a force.

7. Hinge fitting according to Claim 6, **characterized in that** the spring elements are disc springs (22, 23) which are arranged by means of their bores in annular grooves (20, 21) formed in a radially encircling manner on the hub (16) and are in contact by means of their outer, radially encircling region under prestress with the side surfaces of the locking wheel (13).

8. Hinge fitting according to one of Claims 5 to 7, **characterized in that** the hub can be locked in the coupling position and/or in the decoupling position.

9. Hinge fitting according to one of the preceding claims, **characterized in that** the toothings (4, 5) of the first gear wheel (1) and/or of the second gear wheel (3) are of inclined designed in a manner corresponding to the inclined deflection of the locking wheel (13) with respect to the pivot axis (2).

10. Hinge fitting according to one of the preceding claims, **characterized in that** the first gear wheel (1) and the second gear wheel (3) are in contact with each other by means of their mutually facing, axially directed annular regions (6, 7) located radially outside the locking wheel (13).

11. Hinge fitting according to Claim 10, **characterized in that** the axially directed annular region (6) of the one gear wheel (1) has a concentrically encircling annular groove (8) which is open towards the other gear wheel (3) and in which one or more axially protruding lugs (9) which are of corresponding radial width and are part of the other gear wheel (3) engage.

12. Hinge fitting according to either of Claims 10 and 11, **characterized in that** the first gear wheel (1) is secured by securing elements (10, 11) against lifting off axially from the second gear wheel (3).

## Revendications

1. Ferrure d'articulation pour un siège de véhicule, comprenant une partie de ferrure fixe et une partie de ferrure pivotante, qui sont connectées l'une à l'autre de manière à pouvoir pivoter autour d'un axe de pivotement, le mouvement de pivotement de la partie de ferrure pivotante pouvant être bloqué de manière continue par un dispositif de blocage, un premier élément de blocage qui est connecté de manière solidaire en rotation avec la partie de ferrure fixe et un deuxième élément de blocage qui est connecté de manière solidaire en rotation avec la partie de ferrure pivotante, les éléments de blocage opposés les uns aux autres coaxialement à l'axe de pivotement pouvant être accouplés et désaccouplés au moyen d'un dispositif d'actionnement, **caractérisée en ce que** la partie de ferrure fixe présente une première roue dentée (1) coaxiale à l'axe de pivotement (2) avec une première denture (4) orientée axialement et le composant pivotant présente une deuxième roue dentée (3) coaxiale à l'axe de pivotement (2) avec une deuxième denture (5) orientée axialement, qui sont disposées coaxialement à l'axe de pivotement (2) à une distance fixe l'une de l'autre, une roue de blocage (13) étant disposée à cette distance coaxialement entre la première et la deuxième denture (4, 5) et présentant de part et d'autre à chaque fois une denture (14, 15) orientée axialement radialement circonférentielle, avec une division décalée l'une par rapport à l'autre, dont les géométries sont réalisées de telle sorte qu'elles puissent plonger dans les dentures (4, 5) respectivement coaxialement opposées à elles, de la partie de ferrure fixe et de la partie de ferrure mobile, la première denture (4) de la partie de ferrure fixe possédant le même nombre de dents que la denture (14) de la roue de blocage (13) qui lui est coaxialement opposée et la deuxième denture (5) de la partie de ferrure mobile possédant une différence de dents par rapport à la denture (15) de la roue de blocage (13) qui lui est coaxialement opposée, et la roue de blocage (13) pouvant être inclinée par rapport à l'axe de pivotement (2) pouvant être déplacée axialement par le dispositif d'actionnement entre les deux roues dentées (1, 3).

2. Ferrure d'articulation selon la revendication 1, **caractérisée en ce que** les dentures (14, 15) des deux côtés de la roue de blocage (13) possèdent le même nombre de dents et sont décalées l'une de l'autre d'une demi-division.

3. Ferrure d'articulation selon l'une quelconque des revendications précédentes, **caractérisée en ce que** la deuxième denture (5) de la partie de ferrure mobile possède une différence de dents de "1" ou de ">1" par rapport à la denture (15) de la roue de blocage (13) qui lui est coaxialement opposée.

4. Ferrure d'articulation selon l'une quelconque des revendications précédentes, **caractérisée en ce que** la roue de blocage (13) est montée avec un alésage coaxial (17) de manière librement rotative et basculante sur un moyeu (16) coaxial à l'axe de pivotement (2).

5. Ferrure d'articulation selon la revendication 4, **caractérisée en ce que** le moyeu (16) est guidé à travers des alésages de palier (18, 19) de la première roue dentée (1) et/ou de la deuxième roue dentée (3) coaxiaux à l'axe de pivotement (2).

6. Ferrure d'articulation selon la revendication 5, **caractérisée en ce que** le moyeu (16) est monté de manière déplaçable axialement entre une position d'accouplement et une position de désaccouplement du dispositif d'actionnement dans les alésages de palier (18, 19), et la roue de blocage (13) est maintenue des deux côtés entre des éléments de ressort disposés sur le moyeu (16) et exerçant une force de sollicitation axiale sur la roue de blocage (13).

7. Ferrure d'articulation selon la revendication 6, **caractérisée en ce que** les éléments de ressort sont des rondelles élastiques (22, 23) qui sont disposées avec leurs alésages dans des rainures annulaires (20, 21) réalisées radialement sur la périphérie du moyeu (16) et qui sont en appui avec leur région extérieure radialement circonférentielle avec précontrainte contre les surfaces latérales de la roue de blocage (13).

8. Ferrure d'articulation selon l'une quelconque des revendications 5 à 7, **caractérisée en ce que** le moyeu peut être bloqué dans la position d'accouplement et/ou dans la position de désaccouplement.

9. Ferrure d'articulation selon l'une quelconque des revendications précédentes, **caractérisée en ce que** les dentures (4, 5) de la première roue dentée (1) et/ou de la deuxième roue dentée (3) sont réalisées avec une inclinaison correspondant à l'écart d'inclinaison de la roue de blocage (13) par rapport à l'axe de pivotement (2).

10. Ferrure d'articulation selon l'une quelconque des revendications précédentes, **caractérisée en ce que** la première roue dentée (1) et la deuxième roue dentée (3) sont en appui l'une contre l'autre avec leurs régions annulaires (6, 7) situées radialement en dehors de la roue de blocage (13), et orientées axialement l'une vers l'autre.

11. Ferrure d'articulation selon la revendication 10, **caractérisée en ce que** la région annulaire (6) orientée axialement d'une roue dentée (1) présente une rainure annulaire (8) concentrique et circonférentielle, ouverte vers l'autre roue dentée (3), dans laquelle s'engagent un ou plusieurs éléments rapportés (9) saillant axialement de largeur radiale correspondante de l'autre roue dentée (3).

12. Ferrure d'articulation selon l'une quelconque des revendications 10 et 11, **caractérisée en ce que** la première roue dentée (1) est fixée par des éléments de fixation (10, 11) pour empêcher son soulèvement axial de la deuxième roue dentée (3).
